(19) Europäisches Patentamt
European Patent Office
Office européen des brevets

(11) **EP 4 045 841 B1**

(12) **FASCICULE DE BREVET EUROPEEN**

(45) Date de publication et mention de la délivrance du brevet:
**21.08.2024 Bulletin 2024/34**

(21) Numéro de dépôt: **20792401.0**

(22) Date de dépôt: **14.10.2020**

(51) Classification Internationale des Brevets (IPC):
*F21S 41/143* (2018.01)   *F21S 41/153* (2018.01)
*F21S 41/275* (2018.01)   *G02B 5/02* (2006.01)
*F21S 41/663* (2018.01)

(52) Classification Coopérative des Brevets (CPC):
**F21S 41/143; F21S 41/153; F21S 41/275;**
**F21S 41/663; G02B 5/0215**

(86) Numéro de dépôt international:
**PCT/EP2020/078972**

(87) Numéro de publication internationale:
**WO 2021/074257 (22.04.2021 Gazette 2021/16)**

(54) **MODULE LUMINEUX POUR VÉHICULE AUTOMOBILE**

LICHTMODUL FÜR KRAFTFAHRZEUG

LIGHT MODULE FOR MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.10.2019 FR 1911473**

(43) Date de publication de la demande:
**24.08.2022 Bulletin 2022/34**

(73) Titulaire: **Valeo Vision**
**93012 Bobigny Cedex (FR)**

(72) Inventeur: **ALBOU, Pierre**
**93012 BOBIGNY Cedex (FR)**

(74) Mandataire: **Valeo Visibility**
**Service Propriété Industrielle**
**c/o Valeo Vision**
**34, rue Saint André**
**93012 Bobigny (FR)**

(56) Documents cités:
WO-A1-2013/104785     DE-A1- 102008 039 092
DE-A1- 102015 219 211     US-A1- 2007 176 195
US-A1- 2009 135 491     US-A1- 2017 254 496

**Description**

**DOMAINE TECHNIQUE**

La présente invention concerne les dispositifs d'éclairage et/ou de signalisation et les organes optiques qui y participent. Elle trouve pour application particulièrement avantageuse le domaine des véhicules automobiles.

**ÉTAT DE LA TECHNIQUE**

Dans le secteur de l'automobile, on connait des dispositifs susceptibles d'émettre des faisceaux lumineux, encore appelés fonctions d'éclairage et/ou de signalisation, répondant en général à des réglementations.

Récemment, on a développé des technologies permettant de produire un faisceau segmenté, aussi appelé pixélisé, pour réaliser des fonctions d'éclairage avancées (voir par exemple le document DE 102015219211 A). C'est notamment le cas pour une fonction d'éclairage de type «route complémentaire» généralement basée sur une pluralité d'unités d'illumination comportant chacune une diode électroluminescente, diodes qui peuvent être pilotées individuellement. Ce faisceau peut, notamment, servir à compléter l'éclairage d'un faisceau de type code, pour former un éclairage de type route.

Le faisceau, résultant des différents segments de faisceau issus de chacune des diodes, est projeté au moyen d'un système optique de projection comprenant généralement une ou plusieurs lentilles. Par exemple, on peut produire un faisceau de complément route, associé avec un faisceau de base totalement ou pour le moins majoritairement projeté en dessous d'une ligne horizontale de coupure du type utilisé pour la fonction de feu de croisement, le faisceau de complément route s'additionnant au faisceau de base de sorte à le compléter au-dessus de la ligne de coupure ; avantageusement, ce faisceau de complément route est adaptatif pour allumer ou éteindre certaines parties du faisceau global projeté, par exemple pour des fonctions anti éblouissement. L'acronyme ADB (pour Adaptative Driving Beam signifiant faisceau de route adaptatif) est utilisé pour ce type de fonction.

Dans la présente description, on appelle faisceau segmenté, un faisceau dont la projection forme une image composée de segments de faisceau, chaque segment pouvant être allumé de manière indépendante. On peut employer une source de lumière pixélisée pour former ces segments. Une telle source comprend une pluralité d'éléments émissifs activables sélectivement.

Les éléments émissifs sont placés les uns à côté des autres sur un support, avec un certain pas. L'écartement entre ces éléments induit que des segments projetés par des éléments émissifs contigus ne forment pas une parfaite continuité. Cet écartement se traduit par un contraste de transition avec des parties plus sombres dans les zones de jonction des segments. Ce phénomène dégrade la qualité du faisceau global et un niveau de contraste en deçà d'un seuil (typiquement moins de 5% pour un contraste calculé suivant la formule de Michelson) est à atteindre pour respecter les cahiers des charges de telles fonctions d'éclairage.

Dans le même temps, si l'on cherche à flouter le contour des segments pour estomper ces transitions, on induit un contour moins net du faisceau global formé par la réunion des segments. Dans une fonction ADB, cette netteté est pourtant recherchée pour délimiter efficacement les zones où les autres conducteurs ne sont pas éblouis, sans éteindre plus d'éléments émissifs que nécessaire.

Un objet de la présente invention est donc de proposer un système optique de traitement des rayons lumineux issus de la source pixélisée qui fournisse une netteté satisfaisante du contour d'un faisceau segmenté et une homogénéité convenable de l'éclairement au sein du faisceau.

Les autres objets, caractéristiques et avantages de la présente invention apparaîtront à l'examen de la description suivante et des dessins d'accompagnement. Il est entendu que d'autres avantages peuvent être incorporés.

**RÉSUMÉ**

Pour atteindre cet objectif, selon un mode de réalisation on prévoit un module lumineux pour véhicule automobile, comprenant une source de lumière pixélisée comprenant une pluralité d'éléments émissifs activables sélectivement et un dispositif optique de projection de faisceaux lumineux apte à coopérer avec la source de lumière pixélisée, le dispositif comprenant une lentille dont une première face comprend un réseau de motifs en creux, caractérisé en ce que chaque motif est tel que :

- il présente une symétrie de révolution autour d'une direction normale locale z à la première face de sorte à définir, dans tout plan contenant la direction normale locale z, un profil symétrique en deux zones, à savoir une première zone et une deuxième zone, autour de la normale locale ;
- chacune des deux zones comprend deux portions, une portion basale de la première zone présentant un point bas de jonction avec la portion basale de la deuxième zone, la portion basale de la première zone comportant un premier point intermédiaire de jonction avec une portion sommitale de la première zone, et la portion basale de la deuxième zone comportant un deuxième point intermédiaire de jonction avec une portion sommitale de la deuxième zone ;

- pour chacune des deux zones, la portion basale et la portion sommitale sont symétriques autour de leur point intermédiaire de jonction respectif.

Grâce à ce profil de motifs en creux, on maitrise mieux la netteté du bord du faisceau et on règle, avantageusement sans que son angle soit trop élevé, l'étalement du faisceau. Par exemple, on peut rendre l'angle d'étalement inférieur ou égal à 0.02°.

On peut ainsi réaliser une fonction de transmittance bidirectionnelle au sein de la lentille, avec des paramètres optimisés.

En particulier, lorsque le module lumineux comprend une source lumineuse pixellisée comportant des éléments émissifs activables sélectivement, la symétrie du motif autour du point intermédiaire de jonction du motif permet d'assurer un étalement maîtrisé, de sorte que des zones de jonction entre des éléments émissifs ne créent pas de parties sombres dans l'image par la lentille de la source lumineuse pixellisée. De plus, des inhomogénéités de couleur dans le faisceau correspondant à des inhomogénéités dans l'un des éléments émissifs sont atténuées ou dissimulées entièrement.

Un autre aspect concerne un véhicule équipé d'au moins un module selon la présente invention.

## BRÈVE DESCRIPTION DES FIGURES

Les buts, objets, ainsi que les caractéristiques et avantages de l'invention ressortiront mieux de la description détaillée d'un mode de réalisation de cette dernière qui est illustré par les dessins d'accompagnement suivants dans lesquels :

[Fig.1] La figure 1 représente une vue schématique d'un module lumineux.
[Fig.2] La figure 2 représente une face microstructurée de lentille.
[Fig.3] La figure 3 montre un détail de la figure 2.
[Fig.4] La figure 4 est une représentation d'un demi-profil de microstructure formée par un motif en creux dans la lentille.
[Fig.5] La figure 5 donne des angles de construction du profil.
[Fig.6] La figure 6 expose la notion d'angle solide en un point de la surface du motif en creux.
[Fig.7] La figure 7 donne une explication de calcul de déviation.
[Fig.8]

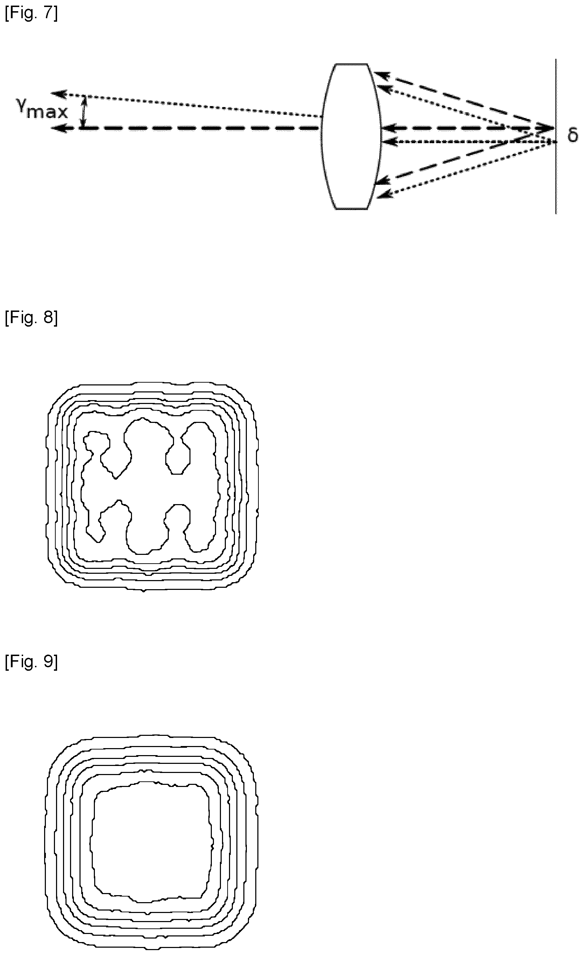

[Fig.9] Les figures 8 et 9 montrent le résultat d'une projection de faisceau, avec un paramétrage différent de la lentille en faisant varier la déviation en sortie de source ($\delta$).

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques.

## DESCRIPTION DÉTAILLÉE

Sauf indication spécifique du contraire, des caractéristiques techniques décrites en détail pour un mode de réalisation donné peuvent être combinées à des caractéristiques techniques décrites dans le contexte d'autres modes de réalisation décrits à titre exemplaire et non limitatif.

On introduit ici des options que l'on peut mettre en oeuvre, soit séparément, soit selon toute combinaison envisageable :

- le profil symétrique peut présenter, au point bas de jonction 233, une tangente orthogonale à la direction normale locale ;
- ce profil peut aussi induire une dérivée seconde infinie au point bas 233;
- le profil symétrique est éventuellement défini par la formule suivante de la portion basale 231 de la première zone :

$$F(y) = \frac{2}{3(n-1)} \sqrt{\frac{k}{\pi}}\, y^{\frac{3}{2}}$$

où :

i. F(y) est une coordonnée d'un point de la portion basale 231 de la première zone, selon la direction normale locale z en utilisant le point bas de jonction avec la portion basale de la deuxième zone comme origine des coordonnées suivant la direction normale locale z, ledit point ayant y comme coordonnée selon une direction locale perpendiculaire à la direction normale locale z ;

ii. n est l'indice de réfraction du matériau de la lentille ;

iii. k est une constante.

- La première face est possiblement la face de sortie 22 de la lentille 2 ;
- la première face est optionnellement portée par un plan ;
- la première face est alternativement portée par une portion de sphère ;
- l'angle de déviation maximal $\gamma_{max}$ de rayons lumineux en sortie est avantageusement inférieur ou égal à la largeur, et de préférence à une demi-largeur, d'un élément émissif de la pluralité d'éléments émissifs 11 ;
- les motifs 11 peuvent présenter une dimension en profondeur inférieure à 2 $\mu$m ;
- les motifs 11 peuvent présenter un diamètre inférieur à 1.5 mm au niveau de la première face ;
- la lentille 2 peut être une lentille de projection.

Dans les caractéristiques exposées ci-après, des termes relatifs à la verticalité, l'horizontalité et à la transversalité (ou encore direction latérale), ou leurs équivalents, s'entendent par rapport à la position dans laquelle le module d'éclairage est destiné à être monté dans un véhicule. Les termes « vertical » et « horizontal » sont utilisés dans la présente description pour désigner des directions, suivant une orientation perpendiculaire au plan de l'horizon pour le terme « vertical » (qui correspond à la hauteur des modules), et suivant une orientation parallèle au plan de l'horizon pour le terme « horizontal ». Elles sont à considérer dans les conditions de fonctionnement du dispositif dans un véhicule. L'emploi de ces mots ne signifie pas que de légères variations autour des directions verticale et horizontale soient exclues de l'invention. Par exemple, une inclinaison relativement à ces directions de l'ordre de + ou - 10° est ici considérée comme une variation mineure autour des deux directions privilégiées. Par rapport au plan horizontal, l'inclinaison est en principe comprise entre -5° et +4° et elle est comprise entre -6° et +7.5° latéralement.

Les projecteurs de véhicule automobile sont munis d'un ou de plusieurs modules lumineux agencés dans un boîtier fermé par une glace de manière à obtenir un ou plusieurs faisceaux d'éclairage et/ou de signalisation à la sortie du projecteur. De façon simplifiée, un module lumineux du boîtier comprend notamment une source de lumière qui émet un faisceau lumineux, un système optique comportant une ou plusieurs lentilles et, dans certains cas, un élément optique, par exemple un réflecteur, pour orienter les rayons lumineux issus des sources lumineuses, afin de former le faisceau lumineux de sortie du module optique. La situation est identique pour les feux arrière.

L'invention peut participer à une fonction faisceau de route qui a pour fonction d'éclairer sur une large étendue la scène face au véhicule, mais également sur une distance conséquente, typiquement environ deux cents mètres. Ce faisceau lumineux, de par sa fonction d'éclairage, se situe principalement au-dessus de la ligne d'horizon. Il peut présenter un axe optique d'éclairement légèrement ascendant par exemple. Notamment, il peut servir à générer une fonction d'éclairage du type « complément route » qui forme une portion d'un feu de route complémentaire à celle produite par un faisceau de champ proche, le complément route cherchant en totalité ou au moins majoritairement à éclairer au-dessus de la ligne d'horizon alors que le faisceau de champ proche (qui peut présenter les spécificités d'un feu de croisement) cherche à éclairer en totalité ou au moins majoritairement en dessous de la ligne d'horizon.

Le dispositif peut aussi servir à former d'autres fonctions d'éclairage via ou en dehors de celles décrites précédemment en relation aux faisceaux adaptatifs.

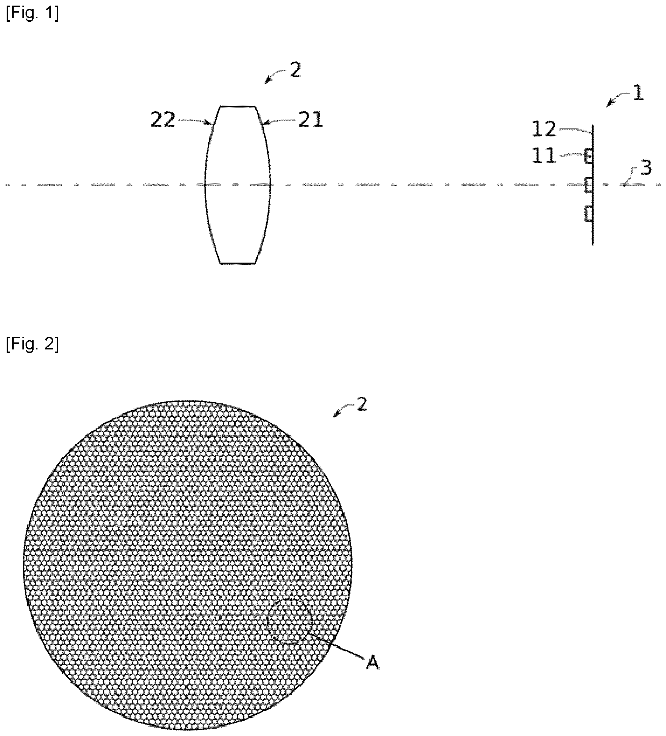

Le module de l'invention incorpore pour le moins une source lumineuse 1 permettant de générer un faisceau de type segmenté à projeter via le système optique. La figure 1 schématise cette situation, le dispositif optique ne présentant ici qu'une lentille ; il est entendu que le dispositif peut comprendre plus de composants, par exemple une lame portant les motifs en creux et/ou d'autres lentilles et notamment au moins une lentille de projection.

La source 1 comprend un support 12 dont une face porte des éléments émissifs 11 activables sélectivement, par exemple sur la base de technologies LED, comme détaillé plus loin.

Une lentille 2 forme, ou participe à former, le système optique. Placé en aval de la source 1, elle reçoit la lumière par une face d'entrée 21 et la restitue par la face de sortie 22. On verra ultérieurement que la lentille 2 comporte un réseau de motifs en creux à partir de l'une de ses faces. Pour le reste, cette lentille peut être optiquement neutre ; par exemple, elle peut être réalisée sur la base d'une lame dont les faces sont planes et parallèles. Suivant une autre option, au moins l'une des faces de la lentille présente une courbure. On peut notamment mettre en oeuvre des lentilles sphériques.

L'invention peut être mise en oeuvre avec différents matériaux optiques pour la lentille 2. Notamment, il peut s'agir de matériau polymère du type PMMA (pour polyméthacrylate de méthyle) ou du type polycarbonate, ou du verre.

Comme le schématise la figure 1, l'axe optique du module comportant la source lumineuse 1 et le dispositif optique, ici représenté par la lentille 2, porte la référence numérique 3. L'axe optique 3 peut être orienté sensiblement horizontalement.

La source de lumière 1 peut notamment être conçue sous la forme d'une matrice d'éléments émissifs dont l'activation peut être pilotée de manière individuelle, pour éteindre ou allumer l'un quelconque des éléments émissifs. On fait ainsi varier, avec une très large flexibilité, la forme du faisceau résultant. À titre purement illustratif, on peut mettre en oeuvre une matrice d'éléments émissifs, par exemple formant 4000 pixels voire plus, arrangés en lignes et en colonnes, par exemple 44 lignes et 28 colonnes.

De façon connue en soi, la présente invention peut utiliser des sources lumineuses du type diodes électroluminescentes encore communément appelées LEDs. Il peut éventuellement s'agir de LED(s) organique(s). Notamment, ces LEDs peuvent être dotées d'au moins une puce utilisant la technologie des semi-conducteurs et apte à émettre une lumière. Par ailleurs, le terme source lumineuse s'entend ici d'un ensemble d'au moins une source élémentaire telle une LED apte à produire un flux conduisant à générer en sortie du module de l'invention au moins un faisceau lumineux. Dans un mode avantageux, la face de sortie de la source est de section rectangulaire, ce qui est typique pour des puces à LEDs.

De préférence, la source électroluminescente comprend au moins une matrice d'éléments électroluminescents monolithique, aussi appelée matrice monolithique. Dans une matrice monolithique, les éléments électroluminescents ont crû depuis un substrat commun, ou ont été reportés sur celui-ci, et sont connectés électriquement de manière à être activables sélectivement, individuellement ou par sous-ensemble d'éléments électroluminescents. Le substrat peut être majoritairement en matériau semi-conducteur. Le substrat peut comporter un ou plusieurs autres matériaux, par exemple non semi-conducteurs. Ainsi chaque élément électroluminescent ou groupe d'éléments électroluminescents peut former un pixel lumineux et peut émettre de la lumière lorsque son ou leur matériau est alimenté en électricité. La configuration d'une telle matrice monolithique permet l'agencement de pixels activables sélectivement très proches les uns des autres, par rapport aux diodes électroluminescentes classiques destinées à être soudés sur des plaques de circuits imprimés. La matrice monolithique au sens de l'invention comporte des éléments électroluminescents dont une dimension principale d'allongement, à savoir la hauteur, est sensiblement perpendiculaire à un substrat commun, cette hauteur étant au plus égale au micromètre.

Avantageusement, la ou les matrices monolithiques aptes à émettre des rayons lumineux peuvent être couplées à une unité de contrôle de l'émission lumineuse de la source pixélisée. L'unité de contrôle peut ainsi commander (on peut également dire piloter) la génération et/ou la projection d'un faisceau lumineux pixélisé par le dispositif lumineux. L'unité de contrôle peut être intégrée au dispositif lumineux. L'unité de contrôle peut être montée sur une ou plusieurs des matrices, l'ensemble formant ainsi un module lumineux. L'unité de contrôle peut comporter une unité centrale de traitement couplée avec une mémoire sur laquelle est stockée un programme d'ordinateur qui comprend des instructions permettant au processeur de réaliser des étapes générant des signaux permettant le contrôle de la source lumineuse. L'unité de contrôle peut ainsi par exemple contrôler individuellement l'émission lumineuse de chaque pixel d'une matrice. En outre, la luminance obtenue par la pluralité d'éléments électroluminescents est d'au moins 60Cd/mm$^2$, de préférence d'au moins 80Cd/mm$^2$.

L'unité de contrôle peut former un dispositif électronique apte à commander les éléments électroluminescents. L'unité de contrôle peut être un circuit intégré. Un circuit intégré, encore appelé puce électronique, est un composant électronique reproduisant une ou plusieurs fonctions électroniques et pouvant intégrer plusieurs types de composants électroniques de base, par exemple dans un volume réduit (i.e. sur une petite plaque). Cela rend le circuit facile à mettre en oeuvre. Le circuit intégré peut être par exemple un ASIC ou un ASSP. Un ASIC (acronyme de l'anglais « Application-Specific Integrated Circuit ») est un circuit intégré développé pour au moins une application spécifique (c'est-à-dire pour un client). Un ASIC est donc un circuit intégré (micro-électronique) spécialisé. En général, il regroupe un grand nombre de fonctionnalités uniques ou sur mesure. Un ASSP (acronyme de l'anglais « Application Specific Standard Product ») est un circuit électronique intégré (micro-électronique) regroupant un grand nombre de fonctionnalités pour satisfaire à une application généralement standardisée. Un ASIC est conçu pour un besoin plus particulier (spécifique) qu'un ASSP. L'alimentation en électricité des matrices monolithiques est réalisée via le dispositif électronique, lui-même alimenté en électricité à l'aide par exemple d'au moins un connecteur le reliant à une source d'électricité. La source d'électricité peut être interne ou externe au dispositif selon l'invention. Le dispositif électronique alimente la source lumineuse en électricité. Le dispositif électronique est ainsi apte à commander la source lumineuse.

Selon l'invention, la source de lumière comprend de préférence au moins une matrice monolithique dont les éléments électroluminescents s'étendent en saillie d'un substrat commun. Cet arrangement d'éléments peut être issu d'une croissance sur le substrat à partir duquel ils ont crû respectivement, ou de toute autre méthode de réalisation, par exemple par report des éléments par des techniques de transferts. Différents agencements d'éléments électroluminescents peuvent répondre à cette définition de matrice monolithique, dès lors que les éléments électroluminescents présentent l'une de leurs dimensions principales d'allongement sensiblement perpendiculaire à un substrat commun et que l'écartement entre les pixels, formés par un ou plusieurs éléments électroluminescents regroupés ensemble électriquement, est faible en comparaison des écartements imposés dans des agencements connus de chips carrés plates soudés sur une carte de circuits imprimés.

Notamment la source de lumière selon un aspect de l'invention peut comporter une pluralité d'éléments électroluminescents distincts des autres et que l'on fait croître individuellement depuis le substrat, en étant connectés électriquement pour être activables sélectivement, le cas échéant par sous-ensembles au sein desquels des bâtonnets peuvent être activés simultanément.

Selon un mode de réalisation non représenté, la matrice monolithique comprend une pluralité d'éléments électroluminescents, de dimensions submillimétriques, voire de moins de 10 $\mu$m, qui sont agencés en saillie d'un substrat de manière à former des bâtonnets de section hexagonale. Les bâtonnets électroluminescents s'étendent parallèlement à l'axe optique du module lumineux quand la source de lumière est en position dans le boîtier.

Ces bâtonnets électroluminescents sont regroupés, notamment par des connexions électriques propres à chaque ensemble, en une pluralité de portions activables sélectivement. Les bâtonnets électroluminescents prennent naissance sur une première face d'un substrat. Chaque bâtonnet électroluminescent, ici formé par utilisation de nitrure de gallium (GaN), s'étend perpendiculairement, ou sensiblement perpendiculairement, en saillie du substrat, ici réalisé à base de silicium, d'autres matériaux comme du carbure de silicium pouvant être utilisés sans sortir du contexte de l'invention. A titre d'exemple, les bâtonnets électroluminescents pourraient être réalisés à partir d'un alliage de nitrure d'aluminium et de nitrure de gallium (AlGaN), ou à partir d'un alliage de phosphures d'aluminium, d'indium et de gallium (AlInGaP). Chaque bâtonnet électroluminescent s'étend selon un axe d'allongement définissant sa hauteur, la base de chaque bâtonnet étant disposée dans un plan de la face supérieure du substrat.

Selon un autre mode de réalisation non représenté, la matrice monolithique peut comporter des éléments électroluminescents formés par des couches d'éléments électroluminescents épitaxiées, notamment une première couche en GaN dopée n et une seconde couche en GaN dopée p, sur un substrat unique, par exemple en carbure de silicium, et que l'on découpe (par meulage et/ou ablation) pour former une pluralité de pixels respectivement issus d'un même substrat. Il résulte d'une telle conception une pluralité de blocs électroluminescents tous issus d'un même substrat et connectés électriquement pour être activables sélectivement les uns des autres.

Dans un exemple de réalisation selon cet autre mode, le substrat de la matrice monolithique peut présenter une épaisseur comprise entre 100 $\mu$m et 800 $\mu$m, notamment égale à 200 $\mu$m ; chaque bloc peut présenter une longueur et une largeur, chacune étant comprise entre 50 $\mu$m et 500 $\mu$m, préférentiellement comprise entre 100 $\mu$m et 200 $\mu$m. Dans une variante, la longueur et la largeur sont égales. La hauteur de chaque bloc est inférieure à 500 $\mu$m, préférentiellement inférieure à 300 $\mu$m. Enfin la surface de sortie de chaque bloc peut être faite via le substrat du côté opposé à l'épitaxie. La distance de séparation des pixels contigus peut être inférieure à 1 $\mu$m, notamment inférieure à 500 $\mu$m, et elle est préférentiellement inférieure à 200 $\mu$m.

Concernant les puces monolithiques à blocs électroluminescents :

- Le nombre de pixels peut être compris entre 250 et plusieurs milliers. Une valeur typique se situant autour du millier de pixels.
- Leur forme globale est usuellement carrée, et peut aussi être rectangulaire. Ratio de forme généralement compris entre 1:1 et 1:5.
- La taille d'un pixel unitaire (carré dans tous les cas connus, peut être rectangulaire) est entre 100 et 300 $\mu$m dans l'état de l'art actuel.

Selon un autre mode de réalisation non représenté, aussi bien avec des bâtonnets électroluminescents s'étendant respectivement en saillie d'un même substrat, tels que décrits ci-dessus, qu'avec des blocs électroluminescents obtenus par découpage de couches électroluminescentes superposées sur un même substrat, la matrice monolithique peut comporter en outre une couche d'un matériau polymère dans laquelle les éléments électroluminescents sont au moins partiellement noyés. La couche peut ainsi s'étendre sur toute l'étendue du substrat ou seulement autour d'un groupe déterminé d'éléments électroluminescents. Le matériau polymère, qui peut notamment être à base de silicone, crée une couche protectrice qui permet de protéger les éléments électroluminescents sans gêner la diffusion des rayons lumineux. En outre, il est possible d'intégrer dans cette couche de matériau polymère des moyens de conversion de longueur d'onde, et par exemple des luminophores, aptes à absorber au moins une partie des rayons émis par l'un des éléments et à convertir au moins une partie de ladite lumière d'excitation absorbée en une lumière d'émission ayant une longueur d'onde différente de celle de la lumière d'excitation. On pourra prévoir indifféremment que les luminophores sont noyés dans la masse du matériau polymère, ou bien qu'ils sont disposés en surface de la couche de ce matériau polymère. On pourra aussi déposer sous vide les phosphores sur les puces semi-conductrices, sans la couche polymère. La source de lumière peut comporter en outre un revêtement de matériau réfléchissant pour dévier les rayons lumineux vers les surfaces de sortie de la source pixélisée.

Les éléments électroluminescents de dimensions submillimétriques définissent dans un plan, sensiblement parallèle au substrat, une surface de sortie déterminée. On comprend que la forme de cette surface de sortie est définie en fonction du nombre et de l'agencement des éléments électroluminescents qui la composent. On peut ainsi définir une forme sensiblement rectangulaire de la surface d'émission, étant entendu que celle-ci peut varier et prendre n'importe quelle forme sans sortir du contexte de l'invention.

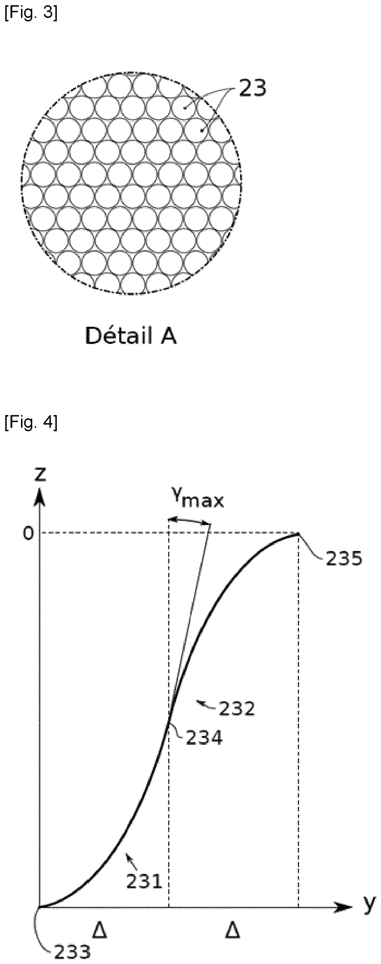

De manière à réaliser le réglage de la fonction de transmittance du dispositif optique de l'invention, la lentille 2 présente, avantageusement sur une première face, ici la face 22 formant sa face de sortie, un réseau de motifs en creux 23. Une représentation indicative de la face 22 est donnée à la figure 2 et un détail, révélant plus précisément le contour extérieur des motifs en creux 23 est fourni à la figure 3. Avantageusement, les motifs en creux 23 ont un profil identique. On comprend que chaque motif en creux 23 débouche au niveau de la première face, ici la face de sortie 22, de sorte à former une ouverture de section circulaire, c'est-à-dire de projection circulaire sur un plan perpendiculaire à la normale à la première surface au centre du motif. Avantageusement, les motifs 23 sont aussi proches que possible les uns des autres de sorte à occuper une portion maximale de la surface de la première face.

Dans le cas où la première face est plane et perpendiculaire à l'axe optique 3, le profil des motifs en creux 23 est avantageusement organisé de sorte que la dimension en profondeur de chaque motif 23 soit parallèle à l'axe optique 3, c'est-à-dire normal à la première face.

Dans le cas où la première face est courbe, la dimension en profondeur de chaque motif 23 et angulairement décalée relativement à l'axe optique 3, de sorte à correspondre à une direction normale locale à la surface de la première face. Par exemple, si la première face est sphérique, la direction normale locale correspond à un rayon de la forme sphérique, à l'endroit de l'axe de symétrie (expliqué plus loin) du motif en creux 23 qui y est localisé.

Ainsi, pour un motif en creux 23 donné, le profil de sa surface peut être défini dans tout plan contenant la direction normale locale, ci-après appelé « z » ou encore F(y). La figure 4 en donne une illustration. Le profil du motif en creux 23 apparaît en trait épais ; il s'agit ici d'une représentation de la moitié du profil, l'autre moitié étant symétrique de celle présentée sur la figure, relativement à la direction z. La direction «y» correspond à la tangente locale à la première face, c'est-à-dire une direction perpendiculaire à la direction normale locale z. À cette figure, la valeur $\Delta$ correspond au quart de la largeur maximale du motif en creux, prises suivant la direction y.

Comme évoqué précédemment, le demi-profil donné, dans un plan yz, à la figure 4 suffit à définir l'ensemble de la forme du motif en creux. En effet, cette dernière présente une symétrie suivant l'axe z. Il est par ailleurs identique dans tout plan yz, c'est-à-dire que l'orientation de la direction y n'a pas d'influence sur la forme. Ainsi, le demi-profil correspond à une première zone, dont une deuxième zone est symétrique suivant la direction z.

La figure 4 fournit par ailleurs un découpage du demi-profil, correspondant à une première zone du profil symétrie global de la portion en creux 23, en deux portions 231, 232. La portion 231 est une portion basale qui s'étend depuis le point bas 233 du motif jusqu'au point intermédiaire 234, avantageusement situé au milieu de la hauteur et de la largeur du motif. La portion 231 a une conformation concave.

La portion 232 est une portion sommitale en ce sens qu'elle débouche au niveau de l'ouverture du motif en creux sur la première face. Elle s'étend entre le point intermédiaire 234 et le sommet du motif, le point 235.

De manière avantageuse, la portion basale 231 et la portion sommitale 232 sont symétriques l'une de l'autre, autour du point 234. Dans ces conditions, la courbure de la portion sommitale est convexe.

On comprend que la portion basale 231 s'étend sur une largeur $\Delta$ depuis le point 233, et que la portion sommitale 232 s'étend sur une même largeur $\Delta$ depuis le point 234.

De manière symétrique, le second demi-profil comporte une portion basale symétrique autour de z de la portion basale 231. Les deux portions basales se rejoignent au point 233. À ce niveau, avantageusement, la tangente à la courbe en résultant est orthogonale à la direction normale locale.

Par ailleurs, toujours à ce niveau, la dérivée seconde est infinie.

Le découpage du profil complet en quatre portions permet un étalement précis du faisceau résultant, de sorte à produire une coupure nette en bordure. Par ailleurs, les dispositions géométriques résultant de l'invention, notamment en matière de tangente et de dérivée seconde au point de jonction bas 233, favorisent la gradation de la puissance optique, de sorte à obtenir une illumination résultante aussi constante que possible par transmission dans le motif 23. En particulier, la forme des motifs en creux peut être configurée pour produire en sortie une illumination sous forme de plateau, avec une intensité lumineuse constante en haut du plateau et des bords de plateau droits, et notamment dans le cas d'une onde plane émergente (après traversée de la première surface en l'absence de motif), sous réserve que cette onde ait une intensité constante (indépendante du point de mesure)).

Un exemple de réalisation précis du profil d'un motif en creux 23 est fourni ci-après, dans l'hypothèse où la première face équipée de ces microstructures est plane et normale à l'axe optique 3.

On exprime, dans la portion basale 231, la courbe reflétant la surface du motif 23 par la fonction : z = F(y). On comprend qu'en tout point présentant les coordonnées y, z correspond un point de la portion basale 231 si z = F(y). La détermination de cette fonction est donnée ci-après. On choisira F(y)= z= 0 au point de jonction entre première et deuxième zones, au fond du motif.

Sur la base de rayons lumineux incidents dirigés parallèlement à la direction normale locale (correspondant à z), un paramètre est la déviation angulaire des rayons, exprimant une valeur d'étalement. Dans la figure 4, on a donné le paramètre $\gamma_{max}$, entre la direction des rayons les plus déviés et la direction normale locale z.

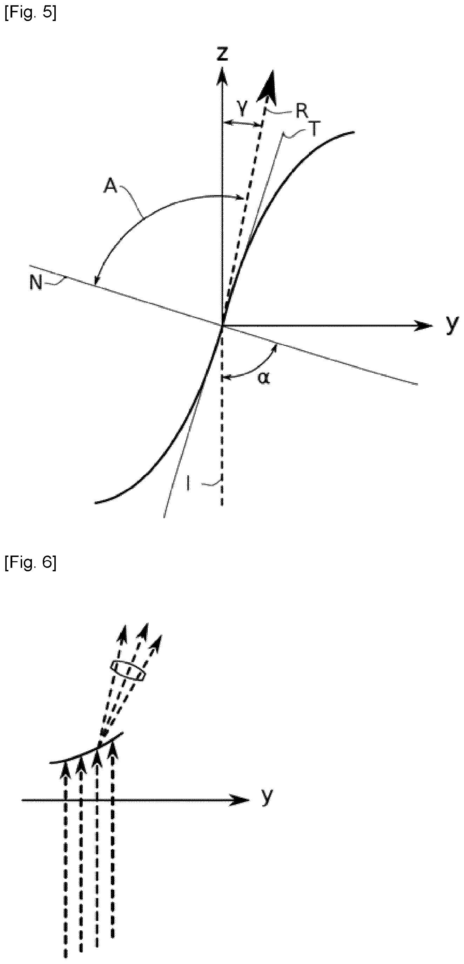

La figure 5 montre les paramètres géométriques, en un point de la portion 231, sur la base d'un rayon incident I produisant un rayon sortant dévié R d'un angle γ de déviations relativement à la direction normale locale z; au point considéré, la tangente au profil est T et la normale N.

Dans ces conditions, et en notant n l'indice de réfraction du matériau de la lentille 2, on peut écrire la formule 1 suivante :

[Math 1]

$$\gamma = \arcsin\big(n\,sin(\alpha)\big) - \alpha$$

en prenant a correspondant à l'angle entre la direction des rayons incidents (typiquement parallèle à z) et la normale N au profil au point considéré, soit encore α tel que :

[Math 2]

$$\tan(\alpha) = \frac{dF}{dy}$$

L'angle arcsin(nsina) est donné sous le symbole A en figure 5.

La figure 6 révèle la capacité d'étalement de la lumière, au travers du profil du motif en creux. En particulier, on peut définir un angle solide dΩ correspondant à l'étalement tridimensionnel maximal des rayons déviés, sur la base de rayons incidents dirigés suivant z. Pour avoir un étalement latéral régulier des rayons sortants, et donc une illumination constante, on fixe un paramètre k qui est une constante reflétant cet étalement et qui correspond à dΩ/dy.

Toujours dans le cas d'une lentille 2 dont la face est plane, on peut aussi écrire :

[Math 3]

$$2\pi \sin(\gamma) \, . \, d\gamma = k \, . \, d\gamma$$

L'équation précédente exprime que dΩ/dy=k en écrivant dΩ=sin (γ)dγdϕ, intégré entre 0 et 2π sur ϕ, angle de rotation autour de l'axe local parallèle à z, (angle qui n'intervient pas ailleurs dans les calculs) ; d'où on peut écrire la formule suivante, sachant que dcos(x)/dx = -sin(x)

[Math 4]

$$\cos(\gamma) = 1 - \frac{k \, . \, y}{2\pi}$$

On a aussi :

[Math 5]

$$\cos(\gamma_{max}) = 1 - \frac{k \, . \, \Delta}{2\pi}$$

avec

[Math 6]

$$\gamma_{max} = \arctan\left(\frac{\delta}{f}\right)$$

où $\delta$ correspond à l'étendue du flou dans l'espace objet et f à la distance focale du système optique de projection. La figure 7 explique ce paramètre $\delta$ en ce qu'il met en correspondance un décalage latéral au niveau de la source, $\delta$, avec un décalage de déviation en sortie du système optique, $\gamma_{max}$. Par exemple, $\delta$ peut correspondre à une dimension inférieure à la largeur d'un pixel, voire à la largeur d'un demi-pixel. Cela peut correspondre à moins de 100 $\mu$m, par exemple 60 $\mu$m. On a alors :

[Math 7]

$$k = \frac{2\pi}{\Delta}\left(1 - \cos\left(arctan\left(\frac{\delta}{f}\right)\right)\right)$$

Résolution pour obtenir la fonction F

Ces formules de base peuvent être résolues pour déterminer la fonction F.

De par la formule 1 ci-dessus, la fonction sin($\alpha$(y)) est la solution d'une équation bicarrée en fonction de y. Par ailleurs, de manière générale, on peut aussi écrire :

[Math 8]

$$\tan(v) = \frac{\sin(v)}{\sqrt{1 - \sin(v)^2}}$$

si bien que l'on peut établir analytiquement :

[Math 9]

$$g(y) = \tan(\alpha(y))$$

que l'on peut intégrer relativement à y pour déduire la fonction F dans la mesure où, d'après la formule math 2 ci-dessus :

[Math 10]

$$\frac{dF}{dy} = g(y)$$

Application à de faibles déviations

Avantageusement, on recherche une déviation maximale des rayons sortants faible, (paramètre $\gamma_{max}$, faible), à proximité de la valeur nulle. Typiquement, une déviation de 0.02° est recherchée. Dans ces conditions, les valeurs $\alpha$ et $\gamma$ sont aussi voisines de zéro. On peut donc simplifier les expressions précédentes de sorte à écrire :

[Math 11]

$$\cos(\gamma) = 1 - \frac{\gamma^2}{2} + o(\gamma^2)$$

d'où :

[Math 12]

$$\gamma = \sqrt{\frac{k.y}{\pi}}$$

On a aussi :

[102] [Math 13]

$$\sin(v) = v + o(v^2)$$

Où v est une variable générique, aussi souvent notée x pour une dimension et où o(x) signifie « négligeable devant x » (terme final d'un développement limité).

[Math 14]

$$\arcsin(v) = v + o(v^2)$$

[Math 15]

$$\tan(v) = v + o(v^2)$$

d'où :

[Math 16]

$$\arcsin\big(n sin(\alpha)\big) - \alpha = (n-1)\alpha + o(\alpha^2)$$

[Math 17]

$$\alpha = \frac{1}{n-1} \cdot \sqrt{\frac{k.y}{\pi}} = \frac{dF}{dy}$$

et finalement :

[Math 18]

$$F(y) = \frac{2}{3(n-1)} \sqrt{\frac{k}{\pi}} y^{\frac{3}{2}}$$

La fonction F ainsi définie ne dépend que du paramètre k reflétant l'étalement désiré des rayons sortants, pour un indice de réfraction donnée. Avantageusement, la puissance affectée à y dans la formule F(y) est inférieure à deux.

Dans cette configuration du profil, la tangente devient perpendiculaire à la direction normale locale z au point bas de jonction 233, avec une dérivée seconde infinie.

Les autres portions du profil se déduisent de la portion 231 du fait des symétries. En particulier, on a les fonctions f(y) déduites suivantes :

f(y) = F(y)-2F($\Delta$) si y est inférieur ou égal à $\Delta$, et f(y) = -F(2$\Delta$-y) si y est supérieur à $\Delta$ et inférieur ou égal 2$\Delta$, avec l'origine des coordonnées selon z qui y est modifiée par rapport au calcul qui précède de F(y) car elle est ici prise, non au fond du motif comme précédemment mais au sommet dudit motif. Une autre expression peut être adoptée, en gardant l'origine suivant z au fond du motif :

f(y) = F(y) si y est inférieur ou égal à $\Delta$, et f(y) = 2F($\Delta$)-F(2$\Delta$-y) si y est supérieur à $\Delta$ et inférieur ou égal 2$\Delta$.

Les figures 8 et 9 fournissent deux exemples du résultat produit par l'invention avec des réglages différents pour le paramètre $\gamma_{max}$. dans le premier cas, les espaces entre les éléments émissifs sont assez détectables, de sorte que l'homogénéité d'illumination n'est pas parfaite, le faisceau résultant comportant des zones plus sombres, correspondant aux zones interstitielles de la source lumineuse. Dans le second cas, le caractère individuel des éléments émissifs est bien moins perceptible, le paramètre $\delta$ ayant été doublé relativement au cas précédent (40 $\mu$m au lieu de 20 $\mu$m).

L'invention n'est pas limitée aux modes de réalisations précédemment décrits.

**Revendications**

1. Module lumineux pour véhicule automobile, comprenant une source de lumière (1) pixélisée comprenant une pluralité d'éléments émissifs (11) activables sélectivement et un dispositif optique de projection de faisceaux lumineux apte à coopérer avec la source (1) de lumière pixélisée, le dispositif comprenant une lentille (2) dont une première face comprend un réseau de motifs (23) en creux, **caractérisé en ce que** chaque motif (23) est tel que :

   - il présente une symétrie de révolution autour d'une direction normale locale (z) à la première face de sorte à définir, dans tout plan contenant la direction normale locale (z), un profil symétrique en deux zones, à savoir une première zone et une deuxième zone, autour de la normale locale ;
   - chacune des deux zones comprend deux portions, une portion basale (231) de la première zone présentant un point bas de jonction (233) avec la portion basale de la deuxième zone, la portion basale (231) de la première zone comportant un premier point intermédiaire (234) de jonction avec une portion sommitale (232) de la première zone, et la portion basale de la deuxième zone comportant un deuxième point intermédiaire de jonction avec une portion sommitale de la deuxième zone ;
   - pour chacune des deux zones, la portion basale et la portion sommitale sont symétriques autour de leur point intermédiaire de jonction respectif.

2. Module lumineux selon la revendication précédente, dans lequel le profil symétrique présente, au point bas de jonction (233), une tangente orthogonale à la direction normale locale et une dérivée seconde infinie.

3. Module lumineux selon l'une quelconque des revendications précédentes, dans lequel le profil symétrique est défini par la formule suivante de la portion basale (231) de la première zone :

$$F(y) = \frac{2}{3(n-1)} \sqrt{\frac{k}{\pi}} y^{\frac{3}{2}}$$

où :

- F(y) est une coordonnée d'un point de la portion basale (231) de la première zone, selon la direction normale locale (z) en utilisant le point bas de jonction avec la portion basale de la deuxième zone comme origine des coordonnées suivant la direction normale locale z, ledit point ayant y comme coordonnée selon une direction locale perpendiculaire à la direction normale locale (z) ;
- n est l'indice de réfraction du matériau de la lentille ;
- k est une constante.

4. Module lumineux selon l'une quelconque des revendications précédentes, dans lequel la première face est la face de sortie (22) de la lentille (2).

5. Module lumineux selon l'une quelconque des revendications précédentes, dans lequel la première face est portée par un plan.

6. Module lumineux selon l'une quelconque des revendications 1 à 4, dans lequel la première face est portée par une portion de sphère.

7. Module lumineux selon l'une quelconque des revendications précédentes, dans lequel l'angle de déviation maximal $\gamma_{max}$ de rayons lumineux en sortie satisfait la relation $\gamma_{max}=\arctan(\delta/f)$ où f correspond à la distance focale du dispositif optique de projection, $\delta$ correspond à un décalage latéral au niveau de la source de lumière, et $\delta$ est inférieur ou égal à la largeur, et de préférence à une demi-largeur, d'un élément émissif de la pluralité d'éléments émissifs (11).

8. Module lumineux selon l'une quelconque des revendications précédentes, dans lequel les motifs (11) présentent une dimension en profondeur inférieure à 2 $\mu$m.

9. Module lumineux selon l'une quelconque des revendications précédentes, dans lequel les motifs (11) présentent un diamètre inférieur à 1.5 mm au niveau de la première face.

10. Module lumineux selon l'une quelconque des revendications précédentes, dans lequel la lentille (2) est une lentille de projection.

**Patentansprüche**

1. Lichtmodul für ein Kraftfahrzeug, das eine pixelierte Lichtquelle (1) umfasst, die eine Vielzahl von selektiv aktivierbaren abstrahlenden Elementen (11) und eine optische Vorrichtung zur Projektion von Lichtbündeln, die geeignet ist, mit der pixelierten Lichtquelle (1) zusammenzuwirken, umfasst, wobei die Vorrichtung eine Linse (2) umfasst, bei der eine erste Seite ein Gitter aus vertieften Mustern (23) umfasst, **dadurch gekennzeichnet, dass** jedes Muster (23) dergestalt ist, dass:

- es eine Rotationssymmetrie um eine lokale Normalenrichtung (z) zu der ersten Seite aufweist, so dass in jeder Ebene, die die lokale Normalenrichtung (z) enthält, ein symmetrisches Profil aus zwei Zonen, und zwar einer ersten Zone und einer zweiten Zone, um die lokale Normale definiert wird;
- jede der beiden Zonen zwei Abschnitte umfasst, wobei ein Basisabschnitt (231) der ersten Zone einen unteren Verbindungspunkt (233) mit dem Basisabschnitt der zweiten Zone aufweist, wobei der Basisabschnitt (231) der ersten Zone einen ersten mittleren Verbindungspunkt (234) mit einem Scheitelabschnitt (232) der ersten Zone beinhaltet und wobei der Basisabschnitt der zweiten Zone einen zweiten mittleren Verbindungspunkt mit einem Scheitelabschnitt der zweiten Zone beinhaltet;
- bei jeder der beiden Zonen der Basisabschnitt und der Scheitelabschnitt um ihren jeweiligen mittleren Verbindungspunkt symmetrisch sind.

2. Lichtmodul nach dem vorhergehenden Anspruch, bei dem das symmetrische Profil, am unteren Verbindungspunkt (233), eine senkrechte Tangente zu der lokalen Normalenrichtung und eine unendliche sekundäre Ableitung aufweist.

3. Lichtmodul nach einem der vorhergehenden Ansprüche, bei dem das symmetrische Profil durch die folgende Formel des Basisabschnitts (231) der ersten Zone definiert wird:

$$F(y) = \frac{2}{3(n-1)} \sqrt{\frac{k}{\pi}} \, y^{\frac{3}{2}},$$

worin:

- F(y) eine Koordinate eines Punkts des Basisabschnitts (231) der ersten Zone entlang der lokalen Normalenrichtung (z) ist, wobei der untere Verbindungspunkt mit dem Basisabschnitt der zweiten Zone als Ursprung der Koordinaten entlang der lokalen Normalenrichtung z verwendet wird, wobei der Punkt y als Koordinate entlang einer rechtwinklig zu der lokalen Normalenrichtung (z) verlaufenden lokalen Richtung hat;
- n der Brechungsindex des Werkstoffs der Linse ist;
- k eine Konstante ist.

4. Lichtmodul nach einem der vorhergehenden Ansprüche, bei dem die erste Seite die Austrittsseite (22) der Linse (2) ist.

5. Lichtmodul nach einem der vorhergehenden Ansprüche, bei dem die erste Seite von einer Ebene getragen wird.

6. Lichtmodul nach einem der Ansprüche 1 bis 4, bei dem die erste Seite von einem Kugelabschnitt getragen wird.

7. Lichtmodul nach einem der vorhergehenden Ansprüche, bei dem der maximale Ablenkwinkel $\gamma_{max}$ von austretenden Lichtstrahlen die Gleichung $\gamma_{max}=\arctan(\delta/f)$ erfüllt, worin f der Brennweite der optischen Vorrichtung zur Projektion entspricht, 5 einem seitlichen Versatz an der Lichtquelle entspricht und $\delta$ kleiner oder gleich der Breite und bevorzugt einer halben Breite eines abstrahlenden Elements der Vielzahl von abstrahlenden Elementen (11) ist.

8. Lichtmodul nach einem der vorhergehenden Ansprüche, bei dem die Muster (11) ein Maß in der Tiefe von weniger als 2 $\mu$m aufweisen.

9. Lichtmodul nach einem der vorhergehenden Ansprüche, bei dem die Muster (11) einen Durchmesser von weniger als 1,5 mm an der ersten Seite aufweisen.

10. Lichtmodul nach einem der vorhergehenden Ansprüche, bei dem die Linse (2) eine Projektionslinse ist.

**Claims**

1. Luminous module for an automotive vehicle, comprising a pixelated light source (1) comprising a plurality of selectively activatable emissive elements (11) and an optical device for projecting light beams that is able to interact with the pixelated light source (1), the device comprising a lens (2) a first face of which comprises an array of recessed patterns (23), **characterized in that** each pattern (23) is such that:

   - it exhibits rotational symmetry about a local direction (z) normal to the first face so as to define, in any plane containing the local normal direction (z), a symmetrical profile with two areas, specifically a first area and a second area, about the local normal;
   - each of the two areas comprises two portions, a basal portion (231) of the first area having a bottom joining point (233) with the basal portion of the second area, the basal portion (231) of the first area comprising a first intermediate joining point (234) with a top portion (232) of the first area, and the basal portion of the second area comprising a second intermediate joining point with a top portion of the second area;
   - for each of the two areas, the basal portion and the top portion are symmetrical about their respective intermediate joining point.

2. Luminous module according to the preceding claim, wherein the symmetrical profile has, at the bottom joining point (233), a tangent orthogonal to the local normal direction and an infinite second derivative.

3. Luminous module according to either one of the preceding claims, wherein the symmetrical profile is defined by the following formula of the basal portion (231) of the first area:

$$F(y) = \frac{2}{3(n-1)} \sqrt{\frac{k}{\pi}} \, y^{\frac{3}{2}}$$

where:

- F(y) is a coordinate of a point of the basal portion (231) of the first area, in the local normal direction (z) using the bottom joining point with the basal portion of the second area as the origin of the coordinates in the local normal direction z, said point having y as coordinate in a local direction perpendicular to the local normal direction (z);
- n is the refractive index of the material of the lens;
- k is a constant.

4. Luminous module according to any one of the preceding claims, wherein the first face is the exit face (22) of the lens (2) .

5. Luminous module according to any one of the preceding claims, wherein the first face is borne by a plane.

6. Luminous module according to any one of Claims 1 to 4, wherein the first face is borne by a portion of a sphere.

7. Luminous module according to any one of the preceding claims, wherein the maximum deflection angle $\gamma_{max}$ of light rays at output satisfies the relationship $\gamma_{max} = \arctan(\delta/f)$ where f corresponds to the focal length of the optical projection device, $\delta$ corresponds to a lateral offset at the light source, and $\delta$ is less than or equal to the width, and preferably to a half-width, of an emissive element of the plurality of emissive elements (11).

8. Luminous module according to any one of the preceding claims, wherein the patterns (11) have a depth dimension less than 2 $\mu$m.

9. Luminous module according to any one of the preceding claims, wherein the patterns (11) have a diameter less than 1.5 mm at the first face.

10. Luminous module according to any one of the preceding claims, wherein the lens (2) is a projection lens.

[Fig. 1]

[Fig. 2]

[Fig. 3]

Détail A

[Fig. 4]

[Fig. 5]

[Fig. 6]

[Fig. 7]

[Fig. 8]

[Fig. 9]

**RÉFÉRENCES CITÉES DANS LA DESCRIPTION**

**Documents brevets cités dans la description**

- DE 102015219211 A